(19) **Europäisches Patentamt / European Patent Office / Office européen des brevets**

(11) **EP 1 800 907 B1**

(12) **EUROPEAN PATENT SPECIFICATION**

(45) Date of publication and mention
of the grant of the patent:
**05.11.2008 Bulletin 2008/45**

(51) Int Cl.:
***B60C 11/00*** *(2006.01)*

(21) Application number: **06125806.7**

(22) Date of filing: **11.12.2006**

(54) **Radial aircraft tire and method of manufacture**

Radialer Flugzeugreifen und Herstellungsverfahren

Pneumatique radial pour avion et procédé de fabrication

(84) Designated Contracting States:
**DE FR GB IT**

(30) Priority: **20.12.2005 US 313016**

(43) Date of publication of application:
**27.06.2007 Bulletin 2007/26**

(73) Proprietor: **The Goodyear Tire & Rubber Company
Akron, OH 44316-0001 (US)**

(72) Inventors:
• **Ueyoko, Kiyoshi
Akron, OH 44333 (US)**

• **Alsobrook, II, Clarence Byrd
Akron, OH 44319 (US)**

(74) Representative: **Kutsch, Bernd
Goodyear S.A.,
Patent Department,
Avenue Gordon Smith
7750 Colmar-Berg (LU)**

(56) References cited:
**EP-A- 1 714 801          FR-A1- 2 094 121
JP-A- 2003 291 611      US-A1- 4 813 467
US-A1- 5 016 838         US-B1- 6 374 883**

EP 1 800 907 B1

**Description**

Field of the Invention

This invention relates to radial aircraft tires and to a method to optimize tread life of such tires.

Background of the Invention

Aircraft tires are subject to extreme loads and deflections and are subjected to extreme accelerations and very high speeds particularly on landings, takeoffs and after prolonged taxiing these radial tires can build up high heat all of which can contribute to rapid tread wear.

The tread thickness of radial aircraft tires are ideally kept to minimal thicknesses to insure the forces generated at very high speeds do not create inertial generated forces that might cause the rotating tire to pull the tread or underlying belt structure apart.

Accordingly, the tread needs to be durable, but relatively thin for this application. Each tire manufacturer ideally wants the tread to survive as many takeoffs and landings as possible. The ability to provide tires with superior durability is a tremendous cost advantage to the airlines.

These tires typically are designed to be re-treaded several times to further save cost. However, as the tread wears it is required to be removed from service and be re-treaded. Naturally, anything that extends the useful life of the tread is very desirable.

Aircraft treads typically have four circumferentially continuous straight grooves which are separated by solid or continuous tread ribs. These include a pair of shoulder ribs, a pair of intermediate ribs and a generally wide central. In some cases the central rib may be divided by another circumferentially continuous center groove to make a five groove tread.

The problem associated with such tires is when one tread rib is completely worn the tire must be exchanged with a new or a re-treaded tire as specified by the aircraft manufacturer. To increase the number of landings, the width of the center rib was increased, but if the center rib becomes too wide, the intermediate and shoulder rib must get narrower. As the shoulder rib narrows the rigidity of this tread portion is reduced and during taxiing transit of the aircraft the abrasion in this region caused rapid tread wear.

One solution was to reduce the number of grooves into two large aqua-channels as is taught in US-A- 6,374,883. This accommodated a larger center rib and naturally a sufficiently large pair of shoulder ribs, however, convincing the users that such a dramatic tread change from the more standard four rib tire was satisfactory if not superior on wet runway conditions has not been easy. On smaller military aircraft with high camber angles the grooves were all positioned asymmetrically on one tread half to avoid premature wear on the tread half with the solid band area void of grooves, as taught in US-A-5,016,838.

In JP-A- 2003-291611, the tread wear problem is solved by a formula based on tread rib width W wherein $W_0$ is the width of the center rib, $W_1$ is the width of the shoulder rib and $W_2$ is the width of two or more intermediate ribs on a four to six groove aircraft tire where $W_0:W_1:W_2$ is set to 1:0.35 - 0.55: 0.45 - 0.55 for four groove tires and $W_0:W_1:W_2$ is set to a ratio 1:0.65 - 0.75: 0.35 - 0.45. These width ratios avoid making the rib too narrow while still providing a wide center rib.

The problem associated with the above cited publication JP-A- 2003-291611 is the effect of the tires footprint shape under normal load and inflation are ignored and therefore the formula may be inappropriate for general use as the footprint shape is well known to affect the tread wear of tires generally and in the case of aircraft tires most specifically.

The present invention provides several formulas that when applied to a radial ply aircraft tread will achieve good uniform wear that takes into account the area of the contacting tread ribs in relation to the contact patch or footprint of the tire which is believed to be a superior way to optimize and achieve uniform tread wear.

Document US-A-4813467 discloses the features of the preamble of claim 1.

Summary of the Invention

A radial aircraft tire having a casing with a belt reinforcing structure overlying a carcass reinforced with radially extending cord reinforced plies and a tread according to claim 1 is disclosed. The invention teaches that superior tread wear is achieved when the relationships of claim 1 are fulfilled.

In one alternative embodiment the relationship can also be applied to a five groove tire having one main groove on the equatorial plane of the tire.

Also a method to make such a tire according to claim 6 is disclosed.

Dependent claims cover preferred embodiments of the invention.

Definitions

The following definitions are controlling for the disclosed invention.

"Axial" and "axially" are used herein to refer to lines or directions that are parallel to the axis of rotation of the tire. "Circumferential" means lines or directions extending along the perimeter of the surface of the annular tire parallel to the Equatorial Plane (EP) and perpendicular to the axial direction.
"Equatorial plane (EP)" means the plane perpendicular to the tire's axis of rotation and passing through the center of its tread.
"Inner" means toward the inside of the tire and "outer" means toward its exterior.
"Lateral" means an axial direction.
"Radial" and "radially" are used to mean directions radially toward or away from the axis of rotation of the tire.

Brief Description of the Drawings

The invention will be described by way of example and with reference to the accompanying drawings in which:

FIG. 1 is a cross sectional view of a tire according to the present invention.
FIG. 2 is an enlarged cross sectional view of an upper shoulder region of the tire of figure 1 taken from the equatorial plane and depicting the locations of the inner and outer main circumferential grooves on one half of the tire.
FIG. 3 is a plan view of a tire footprint or contact patch illustrating the representative area of contact each tread rib makes under rated load and rated inflation of the tire shown in figure 1.
FIG. 4 is a tire footprint or contact patch of an alternative embodiment tire identical to figure 1, however, having an additional center main groove which divides the center rib into two rib portions.
FIG. 5 is a schematic view of several exemplary tire footprints or contact patches for comparing the shoulder rib contact area versus center rib contact area.
FIG. 6 is a schematic view the several exemplary tire footprints or contact patches of figure 5 from which the shoulder contact area is compared to the total contact area, the upper quadrant shown shaded.
FIG. 7 is a plan view of a tire footprint of a tire made according to the present invention.
FIG. 8 is a plan view of a prior art footprint showing the tread made outside the acceptable ratios for contact areas.

Detailed Description of the Invention

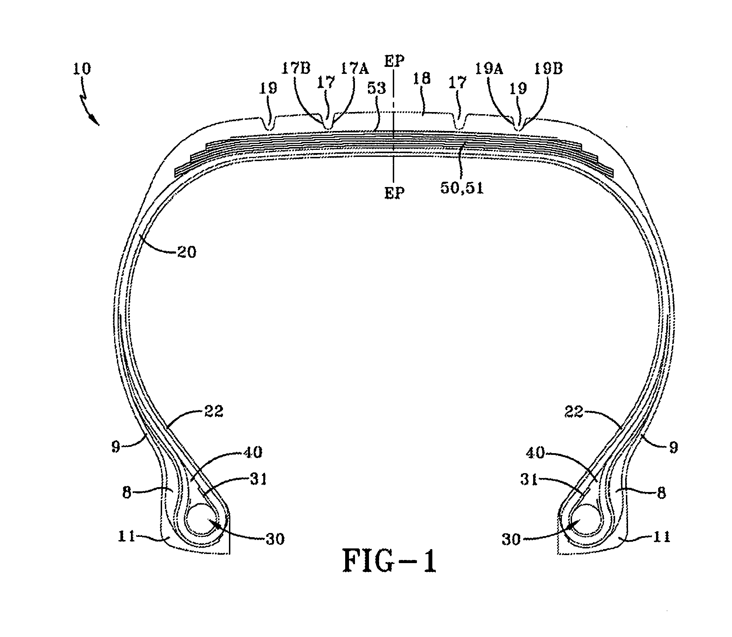

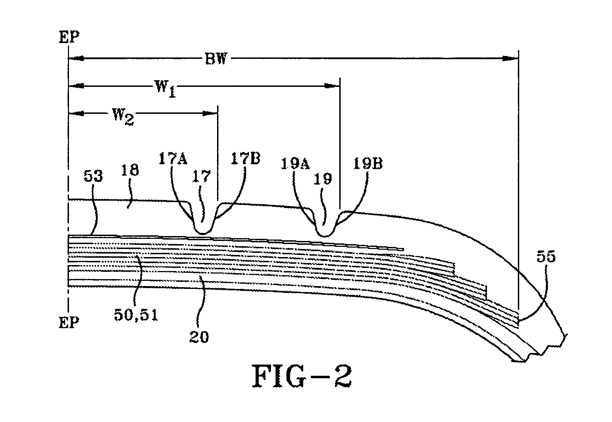

With reference to FIG. 1, a cross-sectional view of a radial ply tire 10 is shown. The tire 10, as illustrated, is a construction for use as an aircraft tire. The tire 10 by way of example is a radial aircraft tire exposed to high internal pressures and tremendous loads.
The tire 10 is a radial ply tire of the tubeless type construction. The tire 10 has an air imperious inner liner 22 which contains fluid or air under pressure. Radially outward of the inner liner 22 are one or more radial plies 20. Each ply 20 extends from an annular tensile member commonly referred to as a bead core 30. As shown the plies 20 wrap about the bead core 30 either turning axially out and up forming a ply turnup or alternately turning axially in and under the bead core 30. Radially above the bead core 30 is a rubber apex 40. The tire bead may be supplemented by a reinforcement chipper ply of textile cords. The chipper can be used to protect the plies 20 against injury during rim mounting. Radially below the bead core area is a chafer 11. Axially outward of the chafer 11 and the plies 20 is an elongated strip 8 of elastomeric material extending from radially inward of the bead adjacent the chafer to a radial location at or slightly above one or more of the ply turnups. This strip 8 is interposed between the sidewall 9 the ply 20. Adjacent the bead core 30 and the plies is a flipper 31 in the exemplary tire as illustrated.
Radially outward of the carcass plies 20 is a plurality of belt reinforcing layers 50, each layer is reinforced with cords 51.
A fabric layer 53 is shown radially outward of the belt layers 50.
Above the fabric layer 53 is a tread 18 as shown, the tread 18 has a plurality of circumferentially continuous main grooves, two grooves 17 being axially inner main grooves and two grooves 19 being axially outer main grooves. Each groove 17, 19 has an axially inner groove wall 17A, 19A and an axially outer groove wall 17B, 19B respectively.
As shown in figure 2, the location of the axially inner main groove 17 is spaced at a distance $W_2$ from the equatorial plane EP of the tire 10 as measured at the axially outer edge location of the axially outer groove wall 17B taken from a cut section of a new tire. The axially outer edge is defined by the extension of the tread arc curvature at the intersection of a line tangent to the groove wall 17B, as shown the location of the axially outer edge as so defined is a point in space because the tread 18 as shown has a small radius of curvature at each groove wall 17A, 17B, 19A, 19B.
The axially outer main groove 19 is located at a distance $W_1$ as measured from an axially outer edge location taken from the cut section of a new tire as similarly defined by the intersection of the extension of the axially outer wall 19B of groove 19 and the tread arc curvature.

In the preferred practice of the invention the grooves 17 and 19 on the opposite tread half not illustrated are symmetrically positioned the same as the tread half portion shown.

With further reference to figure 2, the reinforcing belt structure 50 has an axially outermost edge 55 which is located a distance BW from the equatorial plane EP. The positioning of the grooves 17, 19 is defined by having groove 19 with $W_1$ equal to 0.30 BW to 0.80 BW, preferably equal to 0.52 BW to 0.70 BW and groove 17 with $W_2$ equal to 0 to 0.50 BW, preferably 0 to 0.40 BW and wherein $W_1 > W_2$ all measurements being taken from a cut tire section.

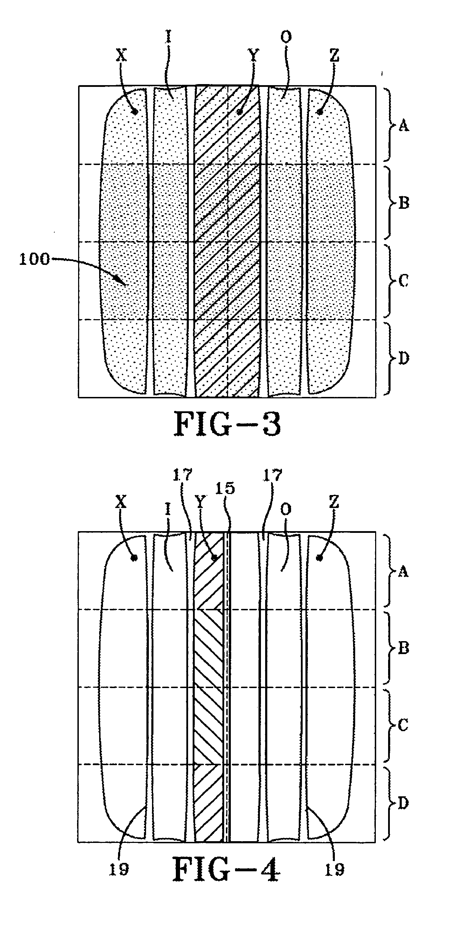

The above locations of main groove locations are subordinate to and somewhat dictated by the contacting surface portion or patch 100 exhibited by the tire 10 when inflated and under rated loaded conditions. The contacting surface portion 100 of the tire 10 is shown in figure 3. The area is best understood as the area of the tread that could be seen if one pressed the tread against a glass plate and looked up to see those portions of the tread 18 contacting the glass while under a load and inflation. Often the tread is coated with ink and pressed against a cardboard sheet to leave a permanent mark often referred to as footprinting. Alternatively, electronic pressure pads can be used to measure contact points and even pressure. These and other footprint procedures are well known in the art and any one of such known techniques can be used with the techniques described in the present invention described herein.

With reference to figure 3, an exemplary footprint 100 of the tire 10 is shown. The four main grooves 17 and 19 define five circumferentially continuous tread ribs. The central rib Y is located between the pair of axially inner main grooves 17. A pair of intermediate ribs I, O are located as shown each rib being between an axially inner groove 17 and an axially outer groove 19, one such rib is on each half of the tread. Axially outward and adjacent the axially outer main grooves 19 are shoulder ribs X, Z. These ribs X, Y, Z and I, O represent the portions of the tread 18 in contact with the surface when placed under rated load and pressure. The sum of the tread area contacting is referred to as the total net contact area. The curvature of the footprint or contact patch and the grooves with the footprint or contact patch provide the external boundary and internal void area respectively.

By empirical analysis and calculation the present inventors and creators of numerous radial aircraft tire designs have arrived at a precise formula and method to optimize tread wear of such tires.

With reference to figure 3, the tread footprint 100 is divided into four equal length zones A, B, C and D by parallel lines axially extending and tangent to the footprint at the leading and trailing edge at the equatorial plane EP, the leading portion being A, the trailing portion D and the middle two portions being B and C. By measuring the area of the shoulder ribs X, Z and the center rib Y areas within each zone A, B, C, D a rather precise measurement can be achieved which takes into account the shape of the footprint and the groove locations. For a symmetrical tread to wear uniformly the tire must exhibit a footprint which satisfies the following relationship. The ratio of the contact area of the shoulder ribs X, Z in the shoulder must be:

$$\frac{(XA + XD) + (ZA + ZD)}{(XB + XC) + (ZB + ZC)} = 0.5 \text{ to } 1.05 \qquad\qquad \text{I}$$

and

$$\frac{(XA + XB + XC + XD) + (ZA + ZB + ZC + ZD)}{TotalNetArea} = 0.34 \text{ to } 0.75 \qquad\qquad \text{II}$$

where the contacting surface portion of the tread is divided into four equal lengths A, B, C, D at the equatorial center-plane and extending axially outwardly therefrom, and the shoulder ribs X and Z are thus each divided into four corresponding distinct contact areas within each respective region A, B, C, D: a leading A, two middle B, C areas and a trailing region D area for each of the respective shoulder ribs X, Z. The contact area within each respective region A, B, C, D being thus XA, XB, XC and XD in rib X and ZA, ZB, ZC and ZD in rib Z.

Preferably, the ratio if formula I is in the range of 0.65 to 0.90. Preferably, the ratio in formula II is in the range of 0.34 to 0.50.

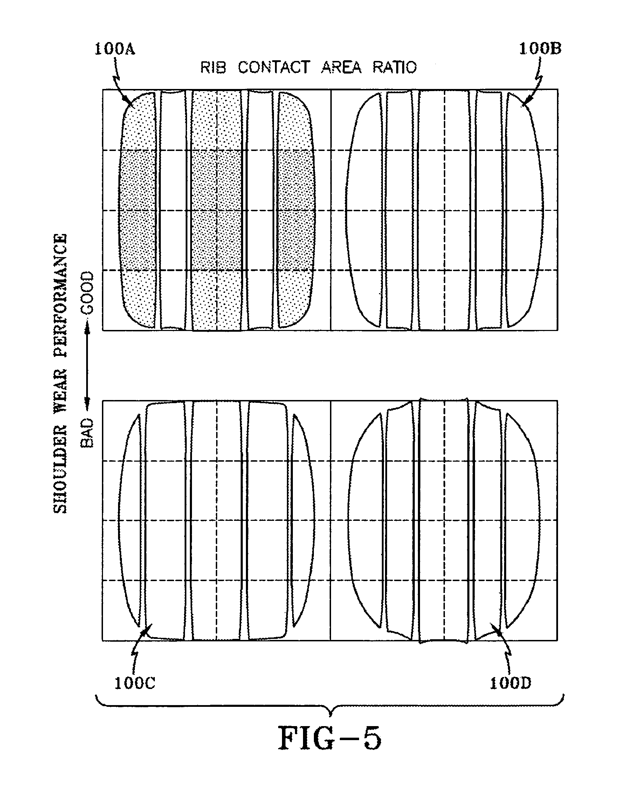

With reference to figure 5, four tire footprints or contact patches 100A, 100B, 100C, 100D are shown which will be an exemplary indication of the shoulder wear performance as a function of the ratio of the rib contact area in the shoulder region and also the ratio of the rib contact area of the center rib. In the upper left hand corner the rib tire footprint is illustrated wherein the formula for the ratio of the shoulder region rib X, Z satisfies a contact area relationship showing a ratio of 0.779 wherein the center rib shows an area ratio of 0.992 as defined by the formulas:

$$\frac{(XA+XD)+(ZA+ZD)}{(XB+XC)+(ZB+ZC)} = 0.5 \text{ to } 1.05 \qquad \qquad \text{I}$$

and

$$\frac{YA+YD}{YB+YC} = 0.95 \text{ to } 1.05, \text{ respectively.} \qquad \qquad \text{III}$$

Preferably, the ration in formula III is in the range of 0.97 to 1.02.

With reference to the tire footprint or contact patch 100B in the upper right hand corner, this tread pattern has a ratio of 0.64 in the shoulder region and the center rib satisfies a 0.992 relationship. Both tires in the upper left and upper right hand portions of figure 5 exhibit good, uniform shoulder wear performance. With respect to the figures 100C and 100D in lower left and the lower right hand corner as can be seen the tread patch 100C on the lower left has a narrow shoulder rib that is spaced substantially from the leading and trailing edge where the tread patch 100D on the right lower quadrant is substantially round. These tires exhibit a relationship or ratio wherein the shoulder rib has a 0.438 and the center rib 0.992 on the lower left quadrant and the tire footprint 100D on the lower right quadrant has a 0.457 with a center rib ratio of 1.001, both these tires exhibit relatively poor wear performance in the shoulder regions of ribs X and Z.

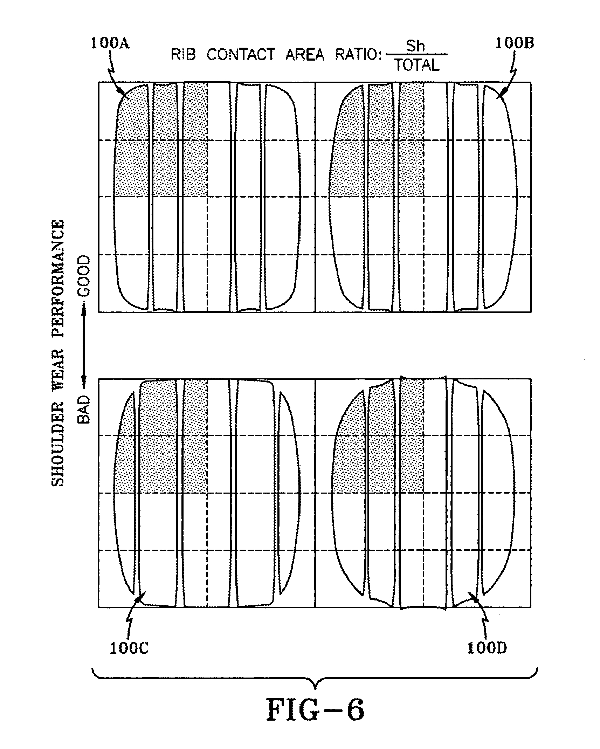

With reference to figure 6, the figure exhibits the four footprint patterns 100A - 100D wherein the shoulder wear performance can be rated from good to bad. The upper two footprints 100A and 100B exhibit good performance, while the two lower footprints 100C and 100D exhibit poor performance. In these exemplary embodiments similar to those shown in figure 5, the rib contact area ratio of the shoulder rib over the total contact area is established. This can be accomplished by looking only at the upper left quadrant, the shaded area shown in the examples. On a symmetrical tire this is possible if the tread pattern was uniformly distributed as shown one only need measure this area and therefore it is highlighted as illustrated, however, for purposes of satisfying the exemplary equations one can take a total calculation and accomplish the same ratios as would be achieved by taking only a section of the tire. Accordingly, if one looks at the relationship of the shoulder rib

$$\frac{(XA+XB+XC+XD)+(ZA+ZB+ZC+ZD)}{TotalNetArea} = 0.34 \text{ to } 0.75$$

If the tire patch 100A in the upper left quadrant has a 0.3825 ratio of the shoulder rib contact area divided by the total contact area, then similarly the tire patch 100B in the upper right has a ratio of 0.3571, both of these ratios are well within the preferred ratio of 0.34 - 0.75. In the lower quadrant the ratio for the lower left tire patch 100C is 0.1782 and the lower right tire patch 100D is 0.3317, both of these tires exhibit poor shoulder wear performance and fall outside the range of 0.34 - 0.75 and therefore would be unacceptable.

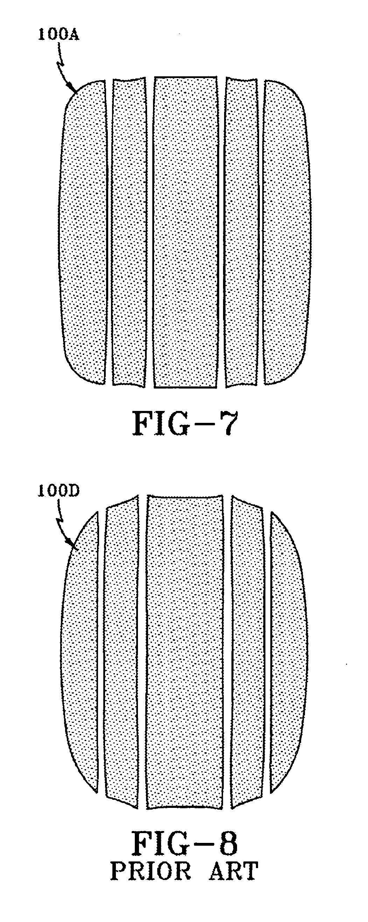

With reference to figure 7 and figure 8, two tire footprints or patches are shown. The tire footprint or contact patch 100A satisfies the relationships and wherein the tire 10 according to the preferred embodiment of the invention is illustrated in figure 7. This tire was built for a Boeing 777/767-400 ER main gear tire and was of a construction 50 x 20.0 R22 32 PR max speed 235 mph. This tire has a rated load and pressure of 57,100 lbs at 220 psi. The gross contact area achieved by this tire which is the total contact area is 247.79 incheS$^2$ and the net contact area is 219.89 incheS$^2$. $W_1$ was located 4.22 inches form the equatorial plane and $W_2$ was located 2.32 inches and BW was 7.0 inches all from the equatorial plane EP. The ratio of $W_1/BW = 0.603$ and $W/BW = 0.331$. This tire as shown meets all the requirements of the satisfied ratios exhibited both for the shoulder ribs and for the center rib.

Referring to figure 8, the prior art tire footprint 100D is shown wherein the total contact area was 231.1 inches$^2$ while the net contact area was 218.0 inches$^2$. The prior art tire as illustrated fell outside the preferred range of ratios, and therefore exhibited poor shoulder wear performance and non-uniform wear across the tread ribs as compared to the tire 10 of figure 7.

It will be appreciated by one of ordinary skill in the art of designing radial aircraft tires that the ability to change a tire's footprint to be within the preferred or desired ratios can be accomplished by changing the tread mold contour, by adding or subtracting belt thickness, or by changing the tread rubber thickness to a profile to more suit to fit the ratios or any combination of such adjustments.

**Claims**

1. A radial aircraft tire having a casing with a belt reinforcing structure (50) overlying a carcass reinforced with radially extending cord reinforced plies (20) and a tread (18), the tread (18) comprising four main grooves (17, 19) extending circumferentially continuously around the tire (10) defining five ribs (X, I, Y, O, Z), the main grooves (17, 19) including two inner main grooves (17) disposed on each side of a central rib said (Y) and two outer main grooves (19) defining a pair of intermediate ribs (I, O) between said inner and outer main grooves (17, 19) and a pair of shoulder ribs (X, Z) wherein one rib (X, Z) in each shoulder region of said tire is located axially outward of a respective outer main groove (19), **characterised in that** the following relationships are fulfilled when the tread surface of the normally inflated tire under rated inflation and rated load contacts with a flat surface:

$$\frac{(XA + XD) + (ZA + ZD)}{(XB + XC) + (ZB + ZC)} = 0.5 \text{ to } 1.05$$

and

$$\frac{(XA + XB + XC + XD) + (ZA + ZB + ZC + ZD)}{TotalNetArea} = 0.34 \text{ to } 0.75$$

where the contacting surface portion of the tread is divided into four equal lengths zones (A, B, C, D) at the equatorial center-plane (EP) and extending axially outwardly therefrom, and the shoulder ribs (X, Z) are thus each divided into four distinct contact areas; a leading zone, two middle zones and a trailing zone within each respective length zone (A, B, C, D) and wherein the contact areas within each respective region (A, B, C, D) is named XA, XB, XC and XD in shoulder rib X and ZA, ZB, ZC and ZD in shoulder rib Z respectively.

2. The radial aircraft tire of claim 1 wherein the tread surface under load and in contact with a flat surface satisfies the additional relationship:

$$\frac{YA + YD}{YB + YC} = 0.95 \text{ to } 1.05$$

where the central rib (Y) is divided into four distinct contact areas named YA, YD, YB, YC by said four equal length zones (A, B, C, D).

3. The radial aircraft tire of claim 1 or 2, wherein an axially outer edge of the outer main grooves (19) is located at a distance $W_1$ as measured from a cut tire section of a new tire, $W_1$ satisfying the relationship:

$$W_1 = 0.30 \text{ BW to } 0.8 \text{ BW;}$$

preferably $W_1$ = 0.52 BW to 0.70 BW,
where BW is the axial distance as measured between the equatorial plane (EP) and an axially outer edge (55) of the belt reinforcing structure (50).

4. The radial aircraft tire of at least one of the previous claims, wherein an axially outer edge of the inner main grooves (17) is located at a distance $W_2$ as measured from a cut tire section of a new tire, $W_2$ satisfying the relationship: $W_2$ = 0 to 0.50 BW, alternately $W_2$=0 BW to 0.40 BW, alternately $W_2$= 0.10 BW to 0.30 BW; where BW is the axial distance as measured between the equatorial plane (EP) and an axially outer edge (55) of the belt reinforcing structure (50).

5. The radial aircraft tire of at least one of the previous claims further comprising a center main groove (15), the center main groove (15) being circumferentially continuous and located in the equatorial plane (EP) dividing the central rib (Y) into two central ribs $Y_1$ and $Y_2$ and wherein

$$\frac{Y_1A+Y_1D}{Y_1B+Y_1C} = 0.95 \text{ to } 1.05$$

and

$$\frac{Y_2A+Y_2D}{Y_2B+Y_2C} = 0.95 \text{ to } 1.05$$

6. A method of manufacturing a radial aircraft tire having a casing with a belt reinforcing structure (50) overlying a carcass reinforced with radially extending cord reinforced plies (20) and a tread (18), the tread comprising four main grooves (17, 19) extending circumferentially continuously around the tire defining five ribs (X, I, Y, O, Z), the main grooves (17, 19) including two inner main grooves (17) disposed on each side of a central rib (Y) and two outer main grooves (17, 19) defining a pair of intermediate ribs (I, O) between inner and outer main grooves (17, 19) and a pair of shoulder ribs (X, Z), wherein one rib (X, Z) in each shoulder region of said tire (10) is located axially outward of a respective outer main groove (19), wherein the method comprises:

   selecting a mold contour in such a way that the following relationships are fulfilled when the tread surface of the normally inflated tire under rated inflation and rated load contacts with a flat surface:

$$\frac{(XA+XD)+(ZA+ZD)}{(XB+XC)+(ZB+ZC)} = 0.5 \text{ to } 1.05$$

   and

$$\frac{(XA+XB+XC+XD)+(ZA+ZB+ZC+ZD)}{TotalNetArea} = 0.34 \text{ to } 0.75$$

   where the contacting surface portion of the tread is divided into four equal lengths zones (A, B, C, D) at the equatorial center-plane (EP) and extending axially outwardly therefrom, and the shoulder ribs (X, Z) are thus each divided into four distinct contact areas; a leading zone, two middle zones and a trailing zone within each respective length zone (A, B, C, D) and wherein the contact areas within each respective region (A, B, C, D) is named XA, XB, XC and XD in shoulder rib X and ZA, ZB, ZC and ZD in shoulder rib Z respectively.

7. The method of manufacturing the radial aircraft tire of claim 6, wherein the mold contour is selected in such a way that the tread surface under load and in contact with a flat surface satisfies the additional relationship:

$$\frac{YA+YD}{YB+YC} = 0.95 \text{ to } 1.05$$

   where the central rib (Y) is divided into four distinct contact areas named YA, YD, YB, YC by said four equal length zones (A, B, C, D).

7

8. The method of manufacturing the radial aircraft tire of claim 6 or 7, wherein the mold contour is selected in such a way that an axially outer edge of the outer main grooves is located at a distance $W_1$ as measured from a cut tire section of a new tire, $W_1$ satisfying the relationship:

$$W_1 = 0.30 \text{ BW to } 0.8 \text{ BW};$$

preferably $W_1 = 0.52$ BW to 0.70 BW,
where BW is the axial distance as measured between the equatorial plane (EP) and an axially outer edge (55) of the belt reinforcing structure (50).

9. The method of manufacturing the radial aircraft tire of at least one of the claims 6 to 8, wherein the mold contour is selected in such a way that an axially outer edge of the inner main grooves (17) is located at a distance $W_2$ as measured from a cut tire section of a new tire, $W_2$ satisfying the relationship: $W_2 = 0$ to 0.50 BW, alternately $W_2 = 0$ BW to 0.40 BW, alternately $W_2 = 0.10$ BW to 0.30 BW; where BW is the axial distance as measured between the equatorial plane (EP) and an axially outer edge (55) of the belt reinforcing structure (50).

10. The method of manufacturing the radial aircraft tire of at least one of the claims 6 to 9, wherein the tread (18) further comprises a center main groove (15), the center main groove (15) being circumferentially continuous and located in the equatorial plane dividing the central rib (Y) into two central ribs $Y_1$ and $Y_2$ and wherein the mold contour is selected in such a way that

$$\frac{Y_1 A + Y_1 D}{Y_1 B + Y_1 C} = 0.95 \text{ to } 1.05$$

and

$$\frac{Y_2 A + Y_2 D}{Y_2 B + Y_2 C} = 0.95 \text{ to } 1.05$$

**Patentansprüche**

1. Radialer Flugzeugreifen, der einen Reifenunterbau mit einer Gürtelverstärkungsstruktur (50), die über einer mit radial verlaufenden kordverstärkten Lagen (20) verstärkten Karkasse liegt, und eine Lauffläche (18) aufweist, wobei die Lauffläche (18) vier Hauptrillen (17, 19) umfasst, die sich in Längsrichtung kontinuierlich um den Reifen (10) erstrecken, wobei sie fünf Rippen (X, I, Y, O, Z) definieren, wobei die Hauptrillen (17, 19) zwei innere Hauptrillen (17) umfassen, die zu beiden Seiten einer zentralen Rippe, besagtem (Y), angeordnet sind, und zwei äußere Hauptrillen (19), welche ein Paar Zwischenrippen (I, O) zwischen den inneren und äußeren Hauptrillen (17, 19) definieren, sowie ein Paar Schulterrippen (X, Z), wobei eine Rippe (X, Z) sich in jedem Schulterbereich des Reifens axial auswärts von einer jeweiligen äußeren Hauptrille (19) befindet, **dadurch gekennzeichnet, dass** die folgenden Beziehungen erfüllt sind, wenn die Profiloberfläche des normal befüllten Reifens unter Nennbefüllung und Nennlastkontakten mit einer flachen Oberfläche ist:

$$\frac{(XA + XD) + (ZA + ZD)}{(XB + XC) + (ZB + ZC)} = 0.5 - 1.05$$

und

$$\frac{(XA + XB + XC + XD) + (ZA + ZB + ZC + ZD)}{\text{Nettogesamtfläche}} = 0{,}34 - 0{,}75$$

wobei der in Kontakt kommende Oberflächenteil der Lauffläche in vier Zonen (A, B, C, D) gleicher Länge an der Äquator-Mittelebene (EP) unterteilt ist und sich axial auswärts von dieser erstreckt, und die Schulterrippen (X, Z) somit jede in vier individuelle Kontaktbereiche unterteilt sind; eine vordere Zone, zwei mittlere Zonen und eine hintere Zone in jeder Zone (A, B, C, D) der jeweiligen Länge, und wobei die Kontaktbereiche in jedem jeweiligen Gebiet (A, B, C, D) in Schulterrippe X als XA, XB, XC und XD beziehungsweise in Schulterrippe Z als ZA, ZB, ZC und ZD bezeichnet sind.

2. Radialer Flugzeugreifen nach Anspruch 1, wobei die Profiloberfläche unter Last und in Kontakt mit einer flachen Oberfläche die zusätzliche Beziehung erfüllt:

$$\frac{YA + YD}{YB + YC} = 0{,}95 - 1{,}05$$

wobei die zentrale Rippe (Y) durch die vier Zonen (A, B, C, D) von gleicher Länge in vier individuelle Kontaktbereiche, als YA, YD, YB, YC bezeichnet, unterteilt wird.

3. Radialer Flugzeugreifen nach Anspruch 1 oder 2, wobei eine axial äußere Kante der äußeren Hauptrillen (19) sich in einem Abstand $W_1$ befindet, gemessen an einem abgeschnittenen Reifenabschnitt eines neuen Reifens, wobei $W_1$ die Beziehung erfüllt:

$$W_1 = 0{,}30\ \text{BW bis } 0{,}8\ \text{BW};$$

bevorzugt $W_1$ = 0,52 BW bis 0,70 BW,
wobei BW der axiale Abstand ist, gemessen zwischen der Äquatorebene (EP) und einer axial äußeren Kante (55) der Gürtelverstärkungsstruktur (50).

4. Radialer Flugzeugreifen nach mindestens einem der vorgenannten Ansprüche, wobei eine axial äußere Kante der inneren Hauptrillen (17) sich in einem Abstand $W_2$ befindet, gemessen an einem abgeschnittenen Reifenabschnitt eines neuen Reifens, wobei $W_2$ die Beziehung erfüllt: $W_2$ = 0 BW bis 0,50 BW; alternativ $W_2$ = 0 BW bis 0,40 BW, alternativ $W_2$ = 0,10 BW bis 0,30 BW; wobei BW der axiale Abstand ist, gemessen zwischen der Äquatorebene (EP) und einer axial äußeren Kante (55) der Gürtelverstärkungsstruktur (50).

5. Radialer Flugzeugreifen nach mindestens einem der vorgenannten Ansprüche, weiter eine zentrale Hauptrille (15) umfassend, wobei die zentrale Hauptrille (15) in Längsrichtung durchlaufend ist und sich in der Äquatorebene (EP) befindet, wobei sie die zentrale Rippe (Y) in zwei zentrale Rippen $Y_1$ und $Y_2$ unterteilt, und wobei

$$\frac{Y_t A + Y_t D}{Y_t B + Y_t C} = 0{,}95 - 1{,}05$$

und

$$\frac{Y_1A + Y_1D}{Y_1B + Y_1C} = 0{,}95 - 1{,}05$$

6. Verfahren zur Herstellung eines radialen Flugzeugreifens, der einen Reifenunterbau mit einer Gürtelverstärkungsstruktur (50), die über einer mit radial verlaufenden kordverstärkten Lagen (20) verstärkten Karkasse liegt, und eine Lauffläche (18) aufweist, wobei die Lauffläche (18) vier Hauptrillen (17, 19) umfasst, die sich in Längsrichtung kontinuierlich um den Reifen (10) erstrecken, wobei sie fünf Rippen (X, I, Y, O, Z) definieren, wobei die Hauptrillen (17, 19) zwei innere Hauptrillen (17) umfassen, die zu beiden Seiten einer zentralen Rippe (Y) angeordnet sind, und zwei äußere Hauptrillen (19), welche ein Paar Zwischenrippen (I, O) zwischen den inneren und äußeren Hauptrillen (17, 19) definieren, sowie ein Paar Schulterrippen (X, Z), wobei eine Rippe (X, Z) sich in jedem Schulterbereich des Reifens axial auswärts von einer jeweiligen äußeren Hauptrille (19) befindet, wobei das Verfahren umfasst:

Auswählen einer Formwerkzeugkontur derart, dass die folgenden Beziehungen erfüllt sind, wenn die Profiloberfläche des normal befüllten Reifens unter Nennbefüllung und Nennlastkontakten mit einer flachen Oberfläche ist:

$$\frac{(XA + XD) + (ZA + ZD)}{(XB + XC) + (ZB + ZC)} = 0{,}5 - 1{,}05$$

und

$$\frac{(XA + XB + XC + XD) + (ZA + ZB + ZC + ZD)}{Nettogesamtfläche} = 0{,}34 - 0{,}75$$

wobei der in Kontakt kommende Oberflächenbereich der Lauffläche in vier Zonen (A, B, C, D) gleicher Länge an der Äquator-Mittelebene (EP) unterteilt ist und sich axial auswärts von dieser erstreckt, und die Schulterrippen (X, Z) somit jede in vier individuelle Kontaktbereiche unterteilt sind; eine vordere Zone, zwei mittlere Zonen und eine hintere Zone in jeder Zone (A, B, C, D) der jeweiligen Länge, und wobei die Kontaktbereiche in jedem jeweiligen Gebiet (A, B, C, D) in Schulterrippe X als XA, XB, XC und XD beziehungsweise in Schulterrippe Z als ZA, ZB, ZC und ZD bezeichnet sind.

7. Verfahren zur Herstellung des radialen Flugzeugreifens nach Anspruch 6, wobei die Formwerkzeugkontur derart gewählt ist, dass die Profiloberfläche unter Last und in Kontakt mit einer flachen Oberfläche die zusätzliche Beziehung erfüllt:

$$\frac{YA + YD}{YB + YC} = 0{,}95 \text{ à } 1{,}05$$

wobei die zentrale Rippe (Y) durch die vier Zonen (A, B, C, D) von gleicher Länge in vier individuelle Kontaktbereiche, als YA, YD, YB, YC bezeichnet, unterteilt wird.

8. Verfahren zur Herstellung des radialen Flugzeugreifens nach Anspruch 6 oder 7, wobei die Formwerkzeugkontur derart gewählt ist, dass eine axial äußere Kante der äußeren Hauptrillen sich in einem Abstand $W_1$ befindet, ge-messen an einem abgeschnittenen Reifenabschnitt eines neuen Reifens, wobei $W_1$ die Beziehung erfüllt:

$$W_1 = 0,30 \text{ BW bis } 0,8 \text{ BW};$$

bevorzugt $W_1$ = 0,52 BW bis 0,70 BW,

wobei BW der axiale Abstand ist, gemessen zwischen der Äquatorebene (EP) und einer axial äußeren Kante (55) der Gürtelverstärkungsstruktur (50).

9. Verfahren zur Herstellung des radialen Flugzeugreifens nach mindestens einem der Ansprüche 6 bis 8, wobei die Formwerkzeugkontur derart gewählt ist, dass eine axial äußere Kante der inneren Hauptrillen (17) sich in einem Abstand $W_2$ befindet, gemessen an einem abgeschnittenen Reifenabschnitt eines neuen Reifens, wobei $W_2$ die Beziehung erfüllt: $W_2$ = 0 BW bis 0,50 BW; alternativ $W_2$ = 0 BW bis 0,40 BW, alternativ $W_2$ = 0,10 BW bis 0,30 BW; wobei BW der axiale Abstand ist, gemessen zwischen der Äquatorebene (EP) und einer axial äußeren Kante (55) der Gürtelverstärkungsstruktur (50).

10. Verfahren zur Herstellung des radialen Flugzeugreifens nach mindestens einem der Ansprüche 6 bis 9, wobei die Lauffläche (18) weiter eine zentrale Hauptrille (15) umfasst, wobei die zentrale Hauptrille (15) in Längsrichtung durchlaufend ist und sich in der Äquatorebene (EP) befindet, wobei sie die zentrale Rippe (Y) in zwei zentrale Rippen $Y_1$ und $Y_2$ unterteilt, und wobei die Formwerkzeugkontur derart gewählt ist, dass

$$\frac{Y_1A + Y_1D}{Y_1B + Y_1C} = 0{,}95 - 1{,}05$$

und

$$\frac{Y_2A + Y_2D}{Y_2B + Y_2C} = 0{,}95 - 1{,}05$$

**Revendications**

1. Bandage pneumatique à nappe radiale pour aéroplane possédant une enveloppe comprenant une structure de renforcement de ceinture (50) recouvrant une carcasse renforcée avec des nappes (20) renforcées avec des câblés s'étendant en direction radiale et une bande de roulement (18), la bande de roulement (18) comprenant quatre rainures principales (17, 19) s'étendant en direction circonférentielle en continu autour du bandage pneumatique (10) en définissant cinq nervures (X, I, Y, O, Z), les rainures principales (17, 19) englobant deux rainures principales internes (17) disposées de chaque côté d'une nervure centrale (Y) et deux rainures centrales externes (19) définissant une paire de nervures intermédiaires (I, O) entre lesdites rainures principales interne et externe (17, 19) et une paire de nervures d'épaulements (X, Z), une nervure (X, Z) dans chaque zone d'épaulement dudit bandage pneumatique étant située à l'extérieur, en direction axiale, d'une rainure principale externe respective (19), **caractérisé en ce que** les équations suivantes sont satisfaites lorsque la surface de bande de roulement du bandage pneumatique normalement gonflé dans des conditions de gonflage normalisé et de charge normalisée entre en contact avec une surface plate :

$$\frac{(XA + XD) + (ZA + ZD)}{(XB + XC) + (ZB + ZC)} = 0{,}5 \text{ à } 1{,}05$$

**et**

$$\frac{(XA + XB + XC + XD) + (ZA + ZB + ZC + ZD)}{AireNetteTotale} = 0,34 \text{ à } 0,75$$

la portion de surface de la bande de roulement entrant en contact étant divisée en quatre zones de longueur égale (A, B, C, D) au plan équatorial central (EP) s'étendant vers l'extérieur en direction axiale à partir de ce dernier, et les nervures d'épaulements (X, Z) étant ainsi chacune subdivisée en quatre zones de contact distinctes : une zone avant, deux zones médianes et une somme arrière au sein de chaque zone de longueur respective (A, B, C, D) et les zones de contact au sein de chaque zone respective (A, B, C, D) étant désignées par les lettres XA, XB, XC et XD dans la nervure d'épaulement X et par les lettres ZA, ZB, ZC et ZD dans la nervure d'épaulement Z, respectivement.

2. Bandage pneumatique à nappe radiale pour aéroplane selon la revendication 1, dans lequel la surface de bande de roulement sous charge et en contact avec une surface plate répond à l'équation supplémentaire suivants :

$$\frac{YA + YD}{YB + YC} = 0,95 \text{ à } 1,05$$

la nervure centrale (Y) étant subdivisée en quatre zones de contact distinctes désignées par les lettres YA, YD, YB, YC par quatre zones de longueur égale (A, B, C, D).

3. Bandage pneumatique à nappe radiale pour aéroplane selon la revendication 1 ou 2, dans lequel le bord externe, en direction axiale, des rainures principales externes (19) est situé à une distance $W_1$, telle qu'on la mesure à partir d'une coupe prise à travers un bandage pneumatique nouveau, $W_1$ répondant à l'équation :

$$W_1 = 0,30 \text{ BW à } 0,8 \text{ BW,}$$

de préférence $W_1 = 0,52$ BW à 0,70 BW
où BW représente la distance axiale mesurée entre le plan équatorial (EP) et le bord externe, en direction axiale, (55) de la structure de renforcement de ceintures (50).

4. Bandage pneumatique à nappe radiale pour aéroplane selon au moins une des revendications précédentes, dans lequel le bord externe, en direction axiale des rainures principales internes (17), est situé à une distance $W_2$, telle qu'on la mesure à partir d'une coupe prise à travers un bandage pneumatique nouveau, $W_2$ répondant à l'équation : $W_2 = 0$ à 0,50 BW, en variante $W_2 = 0$ BW à 0,40 BW, en variante $W_2 = 0,10$ BW à 0,30 BW, où BW représente la distance axiale mesurée entre le plan équatorial (EP) et le bord externe, en direction axiale, (55) de la structure de renforcement de ceintures (50).

5. Bandage pneumatique à nappe radiale pour aéroplane selon au moins une des revendications précédentes, comprenant en outre une rainure principale centrale (15), la rainure principale centrale (15) étant continue en direction circonférentielle et étant située dans le plan équatorial (EP) divisant la nervure centrale (Y) en deux nervures centrales $Y_1$ et $Y_2$, et dans lequel :

$$\frac{Y_1A + Y_1D}{Y_1B + Y_1C} = 0,95 \text{ à } 1,05$$

et

$$\frac{Y_2A + Y_2D}{Y_2B + Y_2C} = 0,95 \text{ à } 1,05$$

.

**6.** Procédé de confection d'un bandage pneumatique à nappe radiale pour aéroplane possédant une enveloppe comprenant une structure de renforcement de ceinture (50) recouvrant une carcasse renforcée avec des nappes (20) renforcées avec des câblés s'étendant en direction radiale et une bande de roulement (18), la bande de roulement (18) comprenant quatre rainures principales (17, 19) s'étendant en direction circonférentielle en continu autour du bandage pneumatique (10) en définissant cinq nervures (X, I, Y, O, Z), les rainures principales (17, 19) englobant deux rainures principales internes (17) disposées de chaque côté d'une nervure centrale (Y) et deux rainures centrales externes (19) définissant une paire de nervures intermédiaires (I, O) entre lesdites rainures principales interne et externe (17, 19) et une paire de nervures d'épaulements (X, Z), une nervure (X, Z) dans chaque zone d'épaulement dudit bandage pneumatique étant située à l'extérieur, en direction axiale, d'une rainure principale externe respective (19), le procédé comprenant le fait de :

sélectionner un contour de moule de telle sorte que les équations suivantes soient satisfaites lorsque la surface de bande de roulement du bandage pneumatique normalement gonflé dans des conditions de gonflage normalisé et de charge normalisée entre en contact avec une surface plate :

$$\frac{(XA + XD) + (ZA + ZD)}{(XB + XC) + (ZB + ZC)} = 0,5 \text{ à } 1,05$$

et

$$\frac{(XA + XB + XC + XD) + (ZA + ZB + ZC + ZD)}{AireNetteTotale} = 0,34 \text{ à } 0,75$$

la portion de surface de la bande de roulement entrant en contact étant divisée en quatre zones de longueur égale (A, B, C, D) au plan équatorial central (EP) s'étendant vers l'extérieur en direction axiale à partir de ce dernier, et les nervures d'épaulements (X, Z) étant ainsi chacune subdivisée en quatre zones de contact distinctes : une zone avant, deux zones médianes et une somme arrière au sein de chaque zone de longueur respective (A, B, C, D) et les zones de contact au sein de chaque zone respective (A, B, C, D) étant désignées par les lettres XA, XB, XC et XD dans la nervure d'épaulement X et par les lettres ZA, ZB, ZC et ZD dans la nervure d'épaulement Z, respectivement.

**7.** Procédé de confection du bandage pneumatique à nappe radiale pour aéroplane selon la revendication 6, dans lequel le contour du moule est sélectionné de telle sorte que la surface de bande de roulement sous charge est en contact avec une surface plate répondant à l'équation supplémentaire suivante :

$$\frac{YA + YD}{YB + YC} = 0,95 \text{ à } 1,05$$

la nervure centrale (Y) étant subdivisée en quatre zones de contact distinctes, désignées par les lettres YA, YD, YB, YC par quatre zones de longueur égale (A, B, C, D).

**8.** Procédé de confection du bandage pneumatique à nappe radiale pour aéroplane selon la revendication 6 ou 7, dans lequel le contour du moule est sélectionné de telle sorte que le bord externe, en direction axiale, des rainures principales externes soit situé à une distance $W_1$, telle qu'on la mesure à partir d'une coupe prise à travers un bandage pneumatique nouveau, $W_1$ répondant à l'équation :

$$W_1 = 0,30 \ BW \ \text{à} \ 0,8 \ BW,$$

de préférence $W_1$ = 0,52 BW à 0,70 BW
où BW représente la distance axiale mesurée entre le plan équatorial (EP) et le bord externe, en direction axiale, (55) de la structure de renforcement de ceintures (50).

9. Procédé de confection du bandage pneumatique à nappe radiale pour aéroplane selon au moins une des revendications 6 à 8, dans lequel le contour du moule est sélectionné de telle sorte que le bord externe, en direction axiale, des rainures principales internes (17) soit situé à une distance $W_2$, telle qu'on la mesure à partir d'une coupe prise à travers un bandage pneumatique nouveau, $W_2$ répondant à l'équation : $W_2$ = 0 à 0,50 BW, en variante $W_2$ = 0 BW à 0,40 BW, en variante $W_2$ = 0,10 BW à 0,30 BW, où BW représente la distance axiale mesurée entre le plan équatorial (EP) et le bord externe, en direction axiale, (55) de la structure de renforcement de ceintures (50).

10. Procédé de confection du bandage pneumatique à nappe radiale pour aéroplane selon au moins une des revendications 6 à 9, dans lequel la bande de roulement (18) comprend en outre une rainure principale centrale (15), la rainure principale centrale (15) étant continue en direction circonférentielle et étant située dans le plan équatorial (EP) divisant la nervure centrale (Y) en deux nervures centrales $Y_1$ et $Y_2$, et dans lequel le contour du moule est sélectionné de telle sorte que :

$$\frac{Y_1 A + Y_1 D}{Y_1 B + Y_1 C} = 0,95 \text{ à } 1,05$$

et

$$\frac{Y_2 A + Y_2 D}{Y_2 B + Y_2 C} = 0,95 \text{ à } 1,05$$

.

FIG-1

FIG-2

X   I        Y   O   Z

A

B

100

C

D

## FIG-3

17   17
Y  15
X   I        O   Z

A

B

C

D

19   FIG-4   19

FIG-5

FIG-6

100A

**FIG-7**

100D

**FIG-8**
**PRIOR ART**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6374883 A
- US 5016838 A
- JP 2003291611 A
- US 4813467 A